# EUROPEAN PATENT SPECIFICATION

(11) **EP 0 772 114 B1**
(45) Date of publication and mention of the grant of the patent: **15.09.2004**
(21) Application number: 96307857.1
(22) Date of filing: 30.10.1996
(51) Int. Cl.: G06F 3/12

(54) **Apparatus and method for programming a job ticket in a document processing system**
Verfahren und Gerät zur Programmierung eines Aufgabentickets in einem Dokumentenverarbeitungssystem
Dispositif et méthode pour programmer un ticket de tâche dans un système de traitement de document

(30) Priority: 30.10.1995 US 550272; 30.10.1995 US 550052; 30.10.1995 US 550053
(43) Date of publication of application: 07.05.1997
(73) Proprietor: XEROX CORPORATION, Rochester, New York 14644 (US)
(72) Inventor: Sklut, Robert L., Rochester, NY 14626 (US); Salgado, David L., Victor, NY 14564 (US)
(74) Representative: Grünecker, Kinkeldey, Stockmair & Schwanhäusser Anwaltssozietät

(56) References cited:
- EP-A- 0 529 808
- EP-A- 0 604 346
- US-A- 5 220 674
- US-A- 5 353 399

## Description

The present invention relates generally to a technique for processing a job in a network document processing system and, more particularly, to a system for 1) programming a job ticket based on a metaphorical template developed with one or more metaphorical elements and 2) providing a metaphorical template, representative of a proposed job ticket, with status information and control metaphors so that one segment of the job ticket can be executed while another segment of the job ticket can be reprogrammed due to an unavailable attirbute.

The concept of employing an object-oriented workflow model to facilitate data processing is disclosed in the following journal article: *A Process Model and System for Supporting Collaberative Work,* in Proceedings of the Conference on Organizational Computing Systems (COCS'91), Atlanta, GA, November, 1991.

The above-mentioned journal article is directed to a model for collaborative work that provides for the decomposition of a collaborative process into units of work, the relative scheduling of these units of work, the flexible assignment and routing of units of work to people who will perform the work, and the presentation and manipulation of documents (or other data) needed in the context of performing the work. This collaborative process model supports the definition, execution, monitoring, and dynamic modification of organizational processes, and is implemented as an object-oriented network service.

From EP-A-O 529 808 a print management process and system for controlling printing of print jobs in a network printing system is known which includes plural workstations, at least one printer and a printer manager coupling the workstation through the network to the printer. In this system the workstations provide electronic print files with electronic job specification for a print job.

US-A-5 353 399 discloses a method and a system for selecting devices in information networks. By displaying corresponding icons on a screen of a computer display the user knows which shared sources are connected to the LAN and can operate the devices by pointing to the icons.

US-A-5 220 674 describes a local area print server for processing printing requests that are sent to a printing system by requesting and storing required resource data and forwarding printer status message to selected destinations. The local area print server identifies the printing request that should be serviced, receive the printing data and printing instructions and forward them to one of the printers. Furthermore, the local area print server monitors the status of events occuring internally within the printers and notifies other components in the network whenever a component needs attention.

From EP-A-O 604 346 a path-through direct manipulation of objects is known; causing appropriate action to occur at that target object. Using a graphical user interface, objects represented by icons are manipulated with a drag and drop technique. These direct manipulations are carried through by tracking a source object to the target object by passing through one or more intervening processor objects and finally dropping the source object on the target objects.

It would be desirable to provide a composite job ticket that is simple, yet effective for use in programming a job to be processed in a network document processing system with multifunctional document processing capability. At the same time, it would be useful if that composite job ticket could employ concepts analogous to those set forth in the area of workflow so that the user of the composite job ticket could obtain a representation of job flow that illustrates the multifunctionality of the job in a manner that is both straightforward and graphical.

According to the present invention, there is provided a system for programming a job ticket with a metaphorical template in a network document processing system as claimed in claim 1.

In accordance with one aspect of the present invention, there is provided a job ticket programming system for use in a document processing system with a plurality of metaphor elements supplied for programming a job associated with the job ticket. Each of the plurality of metaphor elements corresponds with either a set of document processing devices or a set of storage devices. The job ticket is programmed with a metaphorical template defined by one or more metaphorical combinations, each metaphorical combination including one or more of the metaphor elements. The job ticket programming system includes: a) an application server with a memory for storing first and second selection sets, each of the first and second selection sets corresponding with either the document processing devices available in the set of document processing devices or the storage devices available in the set of storage devices, said application server registering a first one of the plurality of metaphor elements with the first selection set and a second one of the plurality of metaphor elements with the second selection set; b) a user interface with a display screen for displaying the first one of the plurality of metaphor elements and the second one of the plurality of metaphor elements on the screen display of the user interface; and c) an image element for connecting the first one of the plurality of metaphor elements and the second one of the plurality of metaphor elements to form one of the one or more metaphorical combinations. In practice, 1) one of the selections in the first selection set is selected with said user interface, said application server determes which one or more of the selections in the second selection set are compatible for use with the selection of the first selection set and modifies the second selection set to form a modified second selection set which indicates the one or more second selection set selections compatible with the first selection set selection, and 3) the job ticket is programmed with both the first selection set selection and one of the one or more selections of the modified second selection set.

In accordance with another aspect of the present invention, there is provided a job ticket programming system for use in a document processing system with a plurality of metaphor elements supplied for programming a job associated with the job ticket. Each of the plurality of metaphor elements corresponds with either a set of document processing devices or a set of storage devices and having a graphical appearance representative of a document processing or storage device with which the graphical metaphor is related. The job ticket programming system includes: a) an application server for storing a first set of attributes and a second set of attributes, each of the first and second attribute sets corresponding with either capabilities available at one of the document processing devices or capabilities available at one of the set of storage devices, said application server registering a first one of the plurality of metaphor elements with the first attribute set and a second one of the plurality of metaphor elements with the second attribute set; b) a user interface with a screen display for displaying the first one of the plurality of metaphor elements; c) said application server linking the first one of the plurality of metaphor elements with the second one of the plurality of metaphor elements, in response to displaying the first one of the plurality of metaphor elements, to form the metaphorical template, the metaphorical template being displayed on the user interface screen display and corresponding with a combined set of attributes, the combined set of attributes including one or more attributes from each of the first and second attribute sets; and d) a system for programming the job ticket with selected attributes from the combined attribute set of the metaphorical template.

In accordance with yet another aspect of present invention, there is provided a job ticket programming system for use in a network document processing system for executing a job with a job ticket where a plurality of metaphor elements are supplied for programming the job with the job ticket. Each of the plurality of metaphor elements corresponds with either a set of document processing devices or a set of storage devices and has a graphical appearance representative of a document processing or storage device with which the graphical metaphor is related, The job ticket programming system includes: a) an application server for storing a set of attributes corresponding with either capabilities available at one of the document processing devices or capabilities available at one of the set of storage devices, said application server registering one of the plurality of metaphor elements with the set of attributes; b) a user interface with a screen display for displaying a metaphorical template, including the one of the plurality of metaphor elements; c) a status indicating metaphor developed with said application server and displayed on the screen display of the user interface, said status indicating metaphor varying as a function of status information associated with the set of attributes; and d) the job ticket being programmed by reference to the status indicating metaphor.

Embodiments of the invention will now be described, by way of example, with reference to the accompanying drawings, in which:
Figure 1 is a schematic, perspective view of a representative network capable of implementing the metaphorical workflow technique illustrated in Figures 2 - 6;
Figures 2 - 6 represent a flow diagram embodying various aspects of the inventive metaphorical workflow technique;
Figures 7 and 8 are partial screen displays including exemplary metaphorical workflow representations used to create job tickets for directing the execution of a job; and
Figures 9 - 12 are schematic exemplary representations of transfer functions, each of which transfer function includes a service provider for implementing an element of a given metaphor.

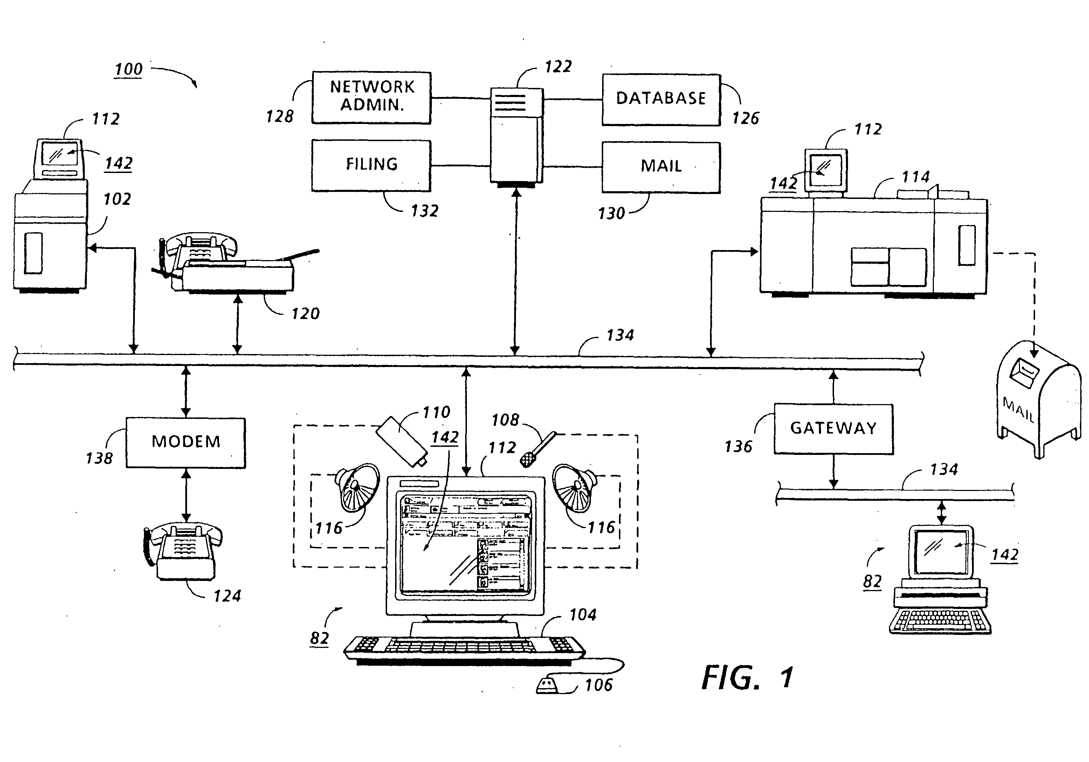

Referring to Figure 1, a network document processing system, suitable for implementing the metaphorical workflow technique of the preferred embodiment is designated by the reference numeral 100. As will be recognized, the network 100 can be implemented using a variety of hardware platforms and includes devices for input including scanner or digital copier 102, keyboard 104, pointing device or mouse 106, microphone 108, and video camera 110. The system further has devices for output including display terminal 112, printer 114, and speakers 116. Input/output (I/O) devices include facsimile 120, file server 122, and telephone 124. Server 122 is configured central to or remote from workstation 82 with public, shared and/or private data storage that is differentiated by user access rights. The server 122 includes relational database system 126, network administration system 128, mail system 130 (e.g. email, voice mail) and data storage and retrieval system 132, and can be physically configured using optical drives, hard drives, floppy drives and/or tape drives. The relational database system 126 provides systems with fast query and retrieval of data.

Workstation 82 operates in a collaborative environment, where users at different workstations 82 can work together in real time to process and distribute public, shared or private information existing in different forms. (Public data is defined herein as data accessible by anyone, shared data is defined as data accessible by a limited number of users and private data is data uniquely accessible by a single user.) Workstation 82 can exist in a distributed or centralized environment. In either environment, workstation 82 is connected to other systems and devices through local area network (LAN) or wide area network (WAN) 134, gateway 136, and/or modem 138. In distributed systems, a number of workstations extend distributed processing and storage capabilities to each other, by providing for example redundant storage or a single mounting of a unique application.

Workstation 82 includes an object oriented user interface (Ul) 142 that uses icons and windows to represent various data objects and user applications such as a display illustrating an office desktop metaphor employing various abstractions of a typical office environment. User interfaces using windows and icons having an object oriented methodology to present metaphors for maintaining data, navigating through various user spaces and presenting abstract computer concepts are well known, an example of which is Globalview TM ("GV") software available from Xerox Corporation, which uses abstractions such as a desktop, inbasket, outbasket and documents. Referring still to Figure 1, the Ul 142 can operate remotely from any system; it is extensible across network services using remote windowing protocols such as X windows ("X Window System", W. Scheifler and James Gettys, Digital Equipment Corporation, U.S., 1992, ISBN 1-55558-088-2). For example, the Ul on printer 114 is available remotely from any workstation 82 or alternate service such as scanner 102.

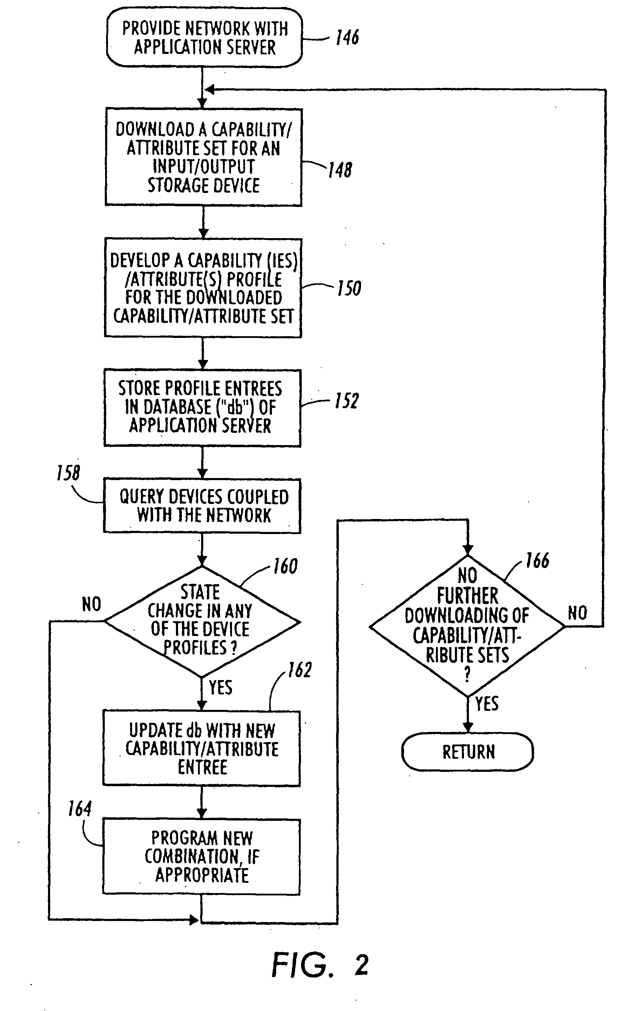

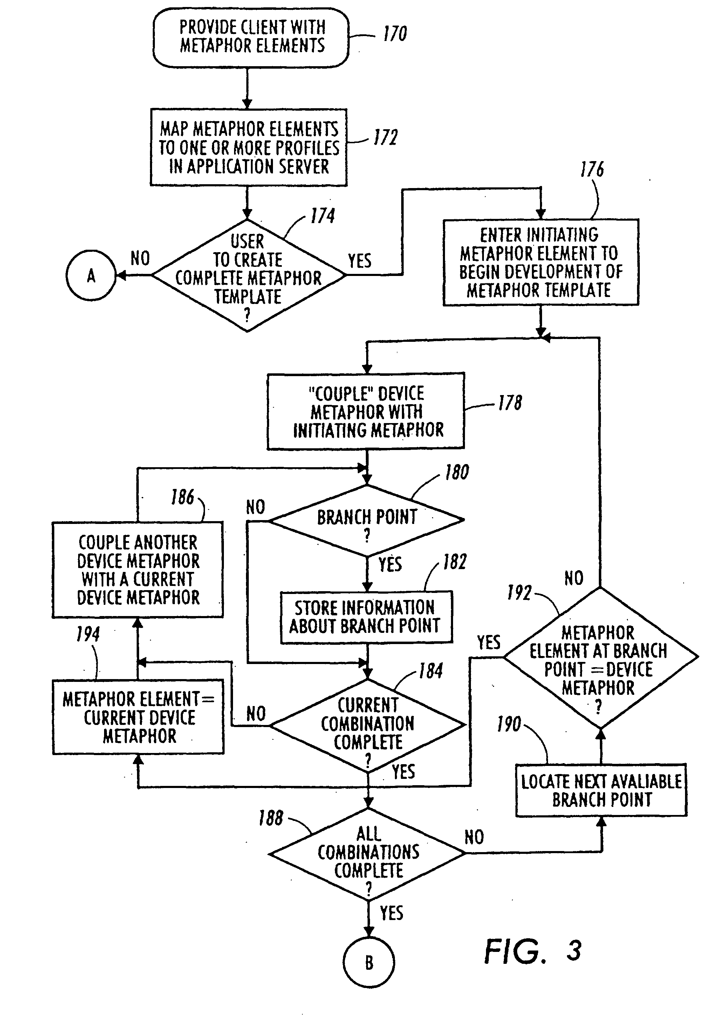

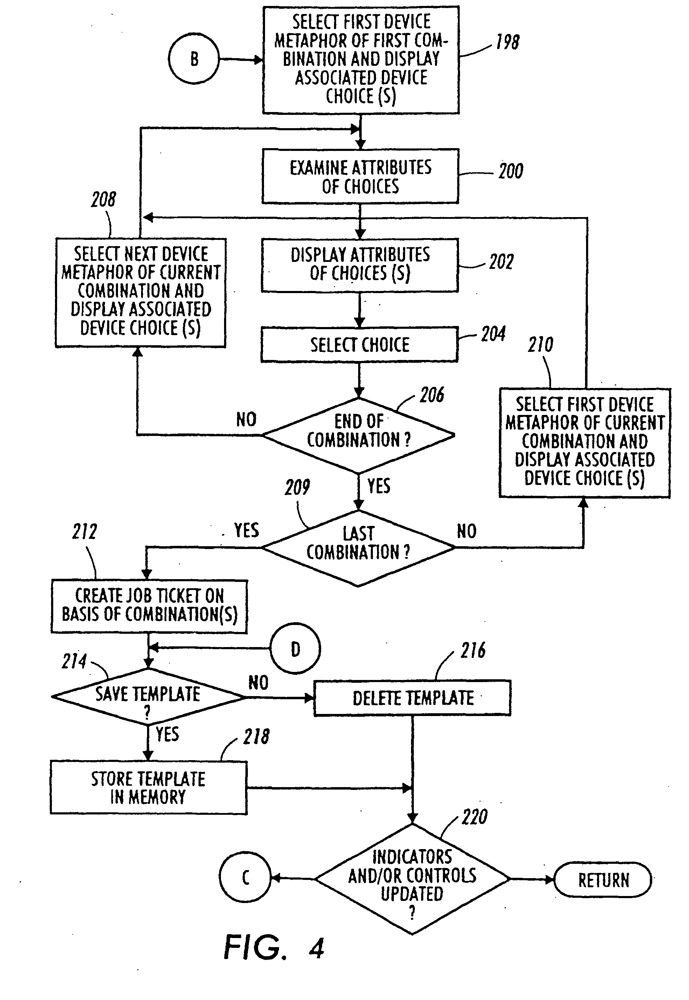

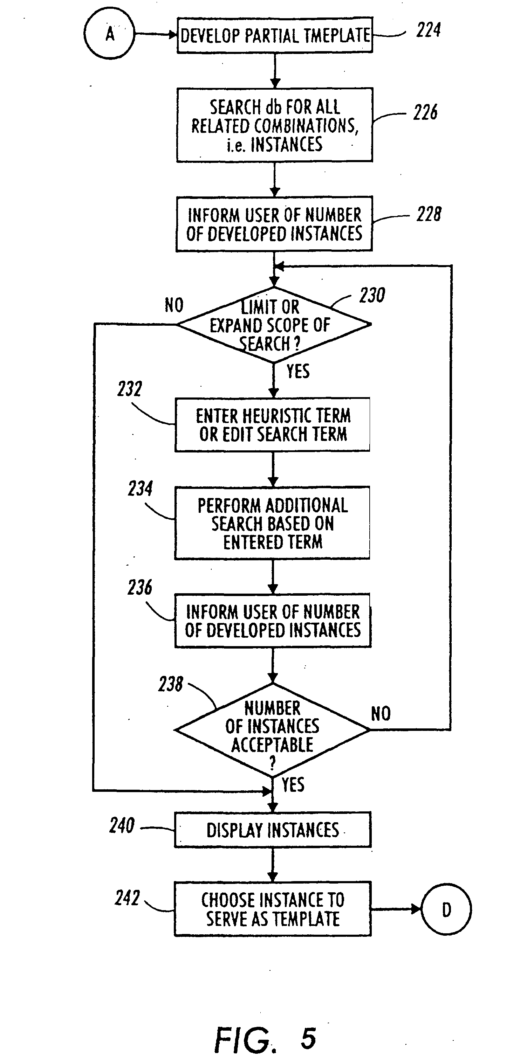

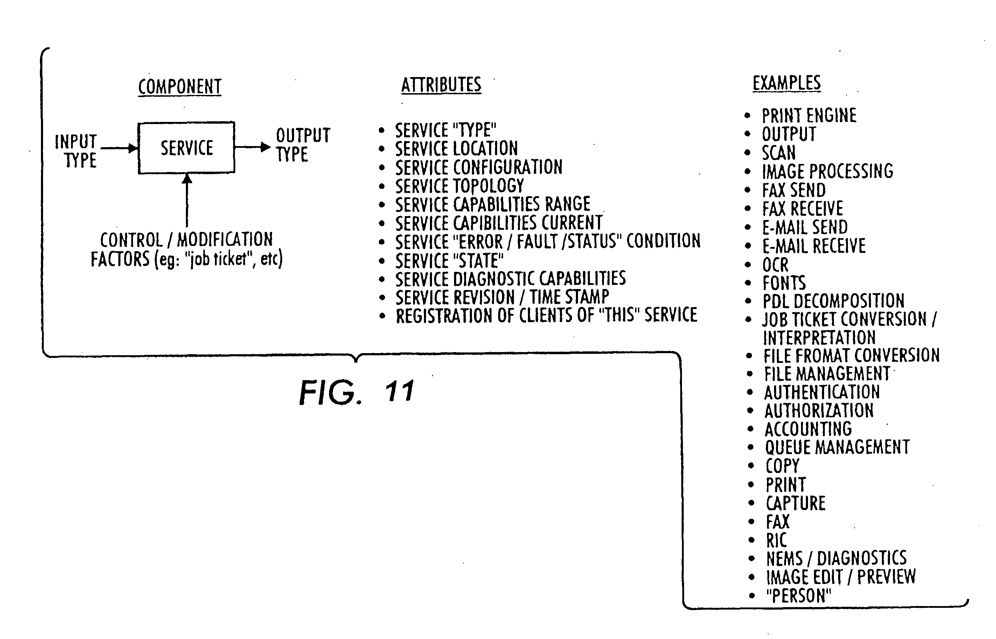

Referring to FIGS. 2-6, a technique for implementing a metaphorical job ticket/control system with the network system of FIG. 1 is described. In general, the flow diagram of FIG. 2 describes a technique for configuring a database with the various profiles of the devices disposed on the network while FIGS. 3 and 4 describe a method for creating a job ticket with a metaphorical template in a manual context. Additionally, the flow diagram of FIG. 5 describes an implementation for creating a job ticket with a metaphorical template in an automatic context. While the flow diagram of FIG. 11 describes an enhancement to both the job ticket creation techniques of flow diagrams of FIGS. 3-5.

Referring specifically to FIGS. 1 and 2, a technique for configuring the network 100 for the metaphorical workflow technique is discussed further. At step 146, the server 122 is configured to serve as an application server. As will appear, the application server includes various elements of network administration, as provided by the network administration system 128 and the relational database 126. As will be appreciated, the server 122 may assume one of various forms. In one embodiment, the server 122 is similar to that disclosed by US-A-5,220,674; however, various suitable arrangements including one or more processors and appropriate storage capacity could be used to provide the functionality of 122.

At step 148, a capability/attribute set for an input/output/storage device is downloaded to the application server. Downloading may be achieved by one of several known procedures available for use in servers such as the Xerox® 8000 series or other suitable Xerox Network Systems (XNS). For each component coupled with the network 134, a profile representing the coupled component is developed (step 150) for storage in the database 126 (steps 152). For purposes of the present description, the capability of a device refers to each feature available for the device, whether that feature is enabled or not. An attribute of a device, on the other hand, refers to an enabled feature currently available to a user. As will be understood, there are various ways in which the profiles can be constructed for storage in the database.

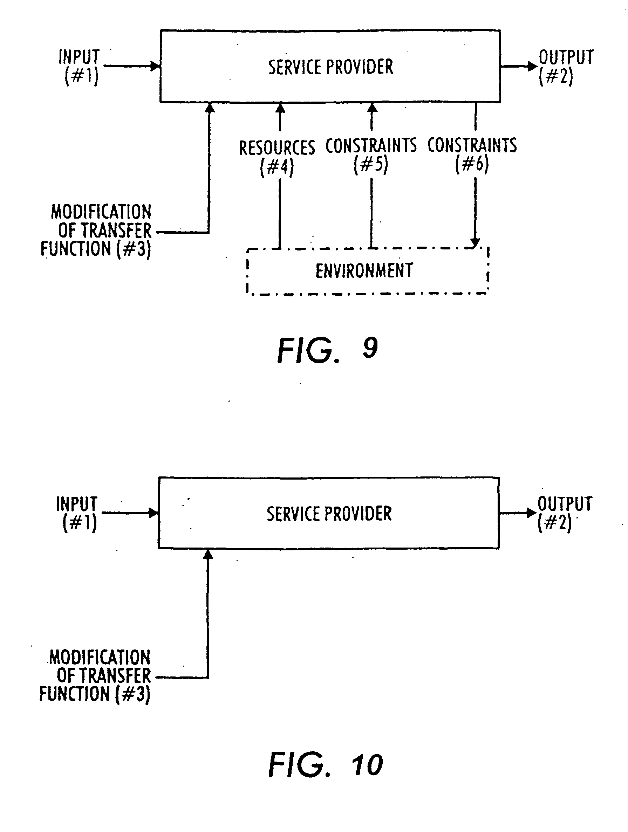

Construction of the profiles (first mentioned above at step 150) in a preferred conceptual model can be understood by reference to FIGS. 9-12. The concept underlying construction of the profiles and their use in a "plug-and-play" context is grounded on a transfer function analysis and synthesis of the various profiles can be described with a simple water flow plumbing metaphor. By reference, complex analysis and synthesis problem spaces are often compared to water flow within some type of fictitious plumbing. At the root of the preferred profile construction is the essential mapping of all component elements e.g. scanners, printers, etc. to simple, unambiguous and generally uniform transfer functions, where a well known type of input is transformed into a known type of output using a description of specific options required. Although the underlying engineering requirements are more complex than just this simple operator perceived view of a service, both the engineering intensive and customer focused sides center on the concept "this goes in, modified by these options, to get this out".

Modeled from the larger engineering perspective, a service, i.e. the functionality provided by a given device or element could be argued to have a description containing the following elements:
1) I consume a well known form of input, described in an unambiguous way;
2) I export a well known form of output, described in an unambiguous way;
3) I allow for the modification of my input-output (transfer function) relationship within certain well established bounds by providing adjustment capability to some aspects of my transfer function;
4) I require well known resources from my environment;
5) I am constrained by certain aspects of my environment (e.g. the state of other services) and must therefore be informed about certain events outside my immediate control (I am a consumer of the events of others); and
6) I have a well behaved effect on my environment and am willing to inform my environment of certain aspects of my behavior on an ongoing basis (I am a producer of events for others)

In this text tool description, the pronouns "I" and "my" were used in a specific (object-oriented) manner to indicate that each service, as proposed here, must be treated as autonomous individuals, and so long as the aforementioned interactions are fulfilled, each service thus defined can function with any other service appropriately defined. Referring to FIG. 9, an abstract service functioning in conjunction with the above constraints is shown. Defined as such, a "Service Provider" need not be a purely technological component but could rather be a human provided process, or a hybrid process combining the capabilities of both humans and technology in order to accomplish a desired task.

Referring specifically to Figure 9, a complete service provider transfer function template is shown. Further study of the model of FIG. 9 indicates that interactions with the "Environment" are an artifact of the technology employed, and as such, most casual users would not be interested in them. It is possible to "hide" such infrastructure components and interactions from such users through strong adherence to specific interface designs and by allowing such "Service Providers" (which, on a macro scale, are nothing more than large objects in an object-oriented sense) access to dynamic run time resource registration databases.

Referring to FIG. 10 (showing an operator view of the service provider transfer function template), given the above-mentioned "hidden" infrastructure support, the view of the model of FIG. 9 can be simplified as shown. Referring to FIG. 11, an overview of a transfer function for a system is shown. In the model of FIG. 17, a given service provider will modify an input type with certain control/modification factors, and such control/modification factors will vary as a function of a given attribute set. Various examples of services suitable for use in a service provider transfer function are also listed in FIG. 16.

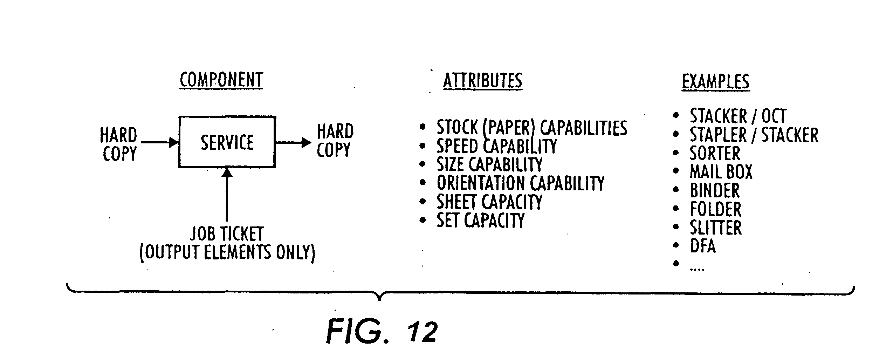

Referring to FIG. 12, a specific example illustrating the functionality of a given service provider transfer function is shown. As can be seen, a hard copy is provided to an output, such as a stacker or sorter, and the resulting output is controlled by the job ticket which includes one or more attributes, such as currently available stock (paper). As will appear from the discussion below, a Service Provider transfer function can correspond to either a single component, such as a single stacker or to a composite element including a plurality of devices, such as a binder, folder and slitter. As will also appear from the discussion below, the combination of plural service providers may constrain the associated attribute set.

Describing a series of relevant "Service Providers" along this transfer function metaphors and providing the operator with a visual means of interacting with these components is the basis of the metaphorical workflow strategy which is a significant concept underlying the subject matter of the present disclosure. Essentially, what is being provided to the operator is a means of describing a complex workflow scenario based upon its component parts and interactions between those parts. Beyond providing an operator with a visual "plumbing" diagram of how their workflow task is constructed, a visual description of what is currently happening could easily be provided, along with providing controls at each important "Service Provider" in order to modify the total workflow progress. Examples of uses of a visual workflow programming metaphor will follow.

Since new devices are constantly being coupled to the network and revised software is being provided on a regular basis, it is preferable to regularly query all devices coupled with the network (step 158) to determine if a transfer function associated with the device has been altered while the database 126 is being configured. In a preferred embodiment, the periodic query of step 158 would not be necessary in that the application server would be registered with each device on the network to receive event related information to determine dynamic alterations in the respective transfer functions of the network devices. Further discussion regarding the device transfer functions of the network is provided below. When a state change occurs in any of the device profiles associated with the network (step 160), the database 126 is updated dynamically with the new capability/attribute entry (step 162) provided by the device undergoing capability/attribute upgrading. A system for updating the database may be readily implemented through use of the ISO document processing architecture (DPA) standard as envisioned by ISO/IEC 10175. The DPA has its origin in the Palladium print system which is a distributed print system developed at MIT/Project Athena with the participation of Digital Equipment Corporation, International Business Machines and Hewlett-Packard. The "Palladium Design Document", a publication of the Massachusetts Institute of Technology, published on June, 1991, provides a detailed discussion of the ISO DPA.

Following step 160 and/or 162, the illustrated approach of FIG. 2 provides, via step 164, for the programming of a new combination or combinations when appropriate. In one example, an administrator of the server 122 enters the system and programs one or more basic combinations supported by the downloading of the current capability/attribute set(s). While in one example, the server administrator may hard code the one or more new combinations, in an alternative example, the combination(s) could be developed dynamically with a suitable API. If more capability/attribute sets are to be downloaded (step 166) to the application server, then the process returns to step 148, otherwise an exit from the routine of FIG. 2 is effected by a return and the process is reentered at a subsequent time to add more capability/attribute sets when necessary.

Referring now to FIG. 3, at steps 170, 172, one or more profiles are mapped to one or more metaphor elements, respectively. In one example, the metaphor elements are conventional pictograms mapped with the profiles in a known manner,. In one application of the Xerox 6085 workstation, a profile of print attributes is mapped to a printer icon. In one embodiment, the user is provided with a selection from a plurality of metaphor elements. These may be provided by way of a common file which is accessible to users across the network.

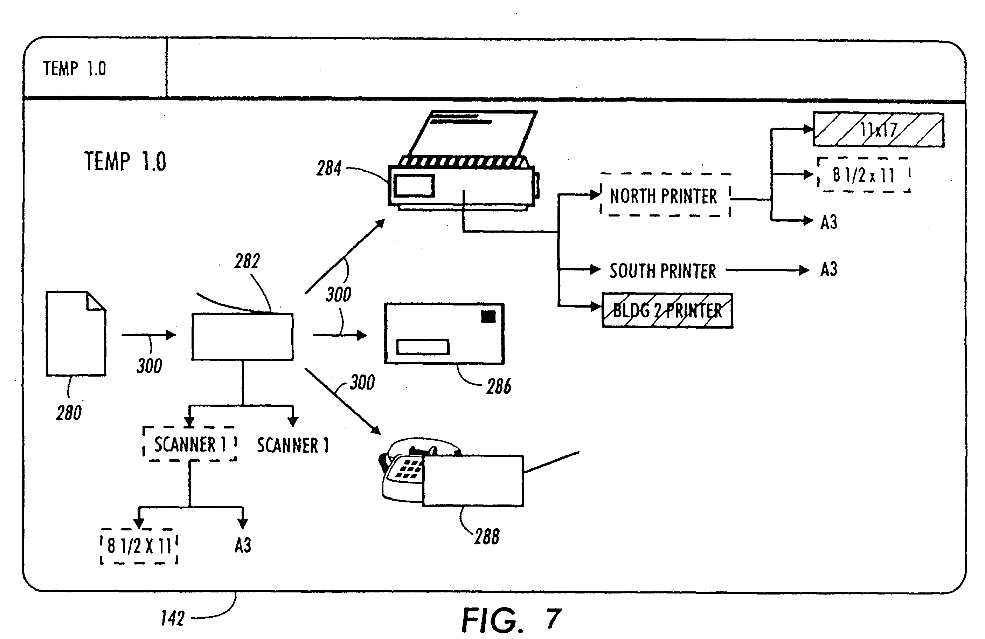

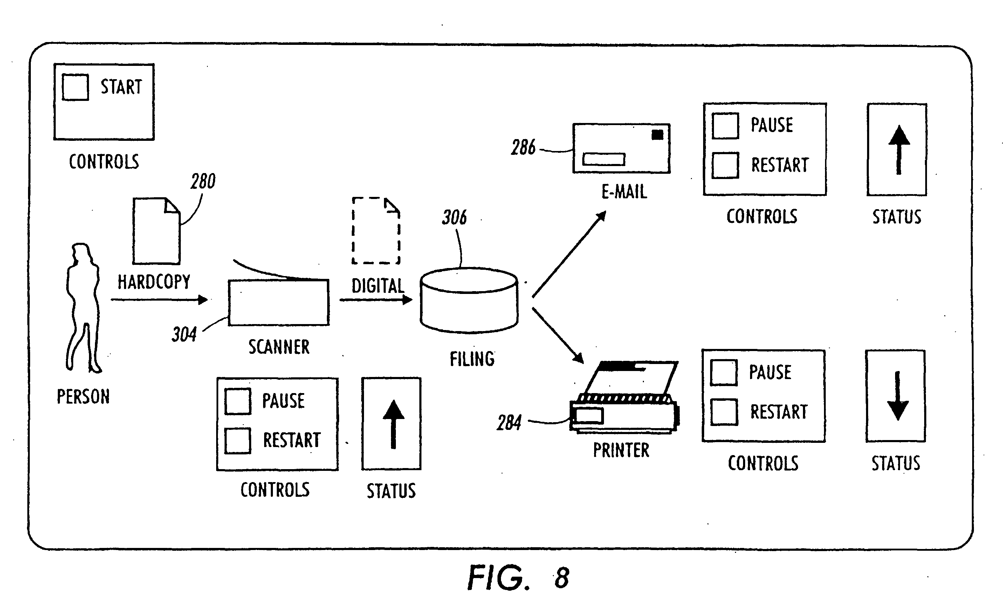

The process, at step 174, provides a user with the capability to create a metaphor template, either manually or automatically. Assuming that the manual approach is selected (step 176) an initiating metaphor element is brought up on the screen to begin the metaphor template development. Initiating metaphor elements preferably include program attributes of a given job and the programmed job attributes may have their source in a suitable dialog, such as a dialog of the type shown in US-A-5,398,289. In the examples of FIGS. 7 and 8, the initiating metaphor element is shown as a document icon, but in other examples the initiating metaphor element could assume the form of a storage icon indicating that the document is disposed at a local or remote storage location.

To initiate the template building process (step 178), a device metaphor, such as a metaphor representing a scanner, a printer, a facsimile device or an E-mail destination is coupled with the initiating metaphor element by way of a connector arrow of the type shown in FIGS. 7 and 8. The connector is associated with code that permits a document, represented by a set of job requirements, to be executed in accordance with a device profile. In one example, connector code may serve to automatically "drag and drop" a job/document into a device. Prior to adding another element (step 180), a determination is made as to whether the template is branching off into another combination. As will be understood, by reference to FIGS. 12 and 13, a given template can include multiple combinations so that, for example, output can be provided to multiple locations. Assuming that a branch point is encountered (step 182), information about the branch point, more specifically its location in the metaphor template, is stored at the server 122 (FIG. 1). As will be recognized from the description below, information about the branch point is stored because it is desirable to complete one combination at a time rather than branching off and developing another combination before the current combination is finished.

If it is found, at step 184, that the current combination is not finished, another device metaphor is added to the current device metaphor (step 186) and the process returns to step 180 where another determination as to the possible existence of a branch point is made. When it is determined at step 184, that the current combination is complete, a check is made at step 188 to determine if all combinations have been completed to thus develop the metaphor template of the subject job [Connector is a group of code that permits a set of job requirements to be executed with a given profile provided that no conflicts between the requirements and the profile attributes exist.]

Assuming that all combinations are not complete in the metaphorical template, a next available branch point is located at step 190. The locating step 190 can be implemented readily by suitable code that moves the process to one or more branch points determined in step 180. As should be understood, a device metaphor can be coupled with another device metaphor or an initiating metaphor element. Accordingly, in view of the query at step 192, the process may either move back to step 178, so that a device metaphor can be coupled with the initiating metaphor element, or to step 194 where the device metaphor can be coupled with another device metaphor.

In the preferred embodiment, each metaphor element is mapped to one or more devices having a common general function. That is, in one example, a device metaphor may be mapped to a plurality of printers. In turn, referring to FIG. 4, in the preferred embodiment of the manual template development process a first device metaphor is selected (step 198) by, for example, double clicking the selected device metaphor, with a conventional pointing device, to display one or more device choice(s). In certain circumstances, it may not be clear to a user which device is preferable unless the attributes of one or more choices are examined. Accordingly, steps 200, 202 and 204 provide the user with the ability to examine the attributes of one or more choices through use of user interface 142 (FIG. 1).

For ease of viewing, in the preferred embodiment, the choices and attributes are shown in terms of pull down menus, disposed in hierarchical order, in an implementation similar to that used by Microsoft in a typical windows operating system environment. The choice selection is typically made with a cursor system through use of double clicking or box checking. The approach of FIG. 4 is recursive and each combination is considered to determine user preference with respect to choices. Assuming the end of the combination has not been met (step 206) another device metaphor is selected (step 208) so that the user can examine attributes of the next device and make a suitable choice in accordance with the above-described procedure. The technique of making choices for each combination is implemented with steps 209 and 210 and the process continues to loop back to step 200 until decisions have been made for each developed metaphorical combination.

Once the metaphorical template is complete (step 208), one or more job tickets based on the one or more programmed combinations are created. In practice, a job ticket is created automatically for each selected choice (step 204) by transferring pertinent information of the choice to a dedicated job ticket dialog. In the common scenario, a composite job ticket including one or more input tickets obtained from the attributes in the, for example, initiating metaphor element and a plurality of output tickets derived from the selected choices is provided.

Upon creating the metaphorical template with its corresponding job ticket(s) (step 212), the user is provided with the opportunity, at step 214, to save the template at the client 82. If there is no desire to save the template, the metaphorical template is deleted, at 216, subsequent to the creation of the composite job ticket at step 212. On the other hand, the user may store, via step 218, the program template in the memory of the client for future use. Referring to FIG. 7, upon storing a metaphorical template in memory, it may be desirable to link the location of the stored template with a button or a graphic selection bar. In practice, a given button may be labeled in accordance with a system similar to that of Microsoft's Word® 6.0. Preferably, a given metaphorical template as shown in FIG. 8 is supplemented with various control and status graphical indicators.

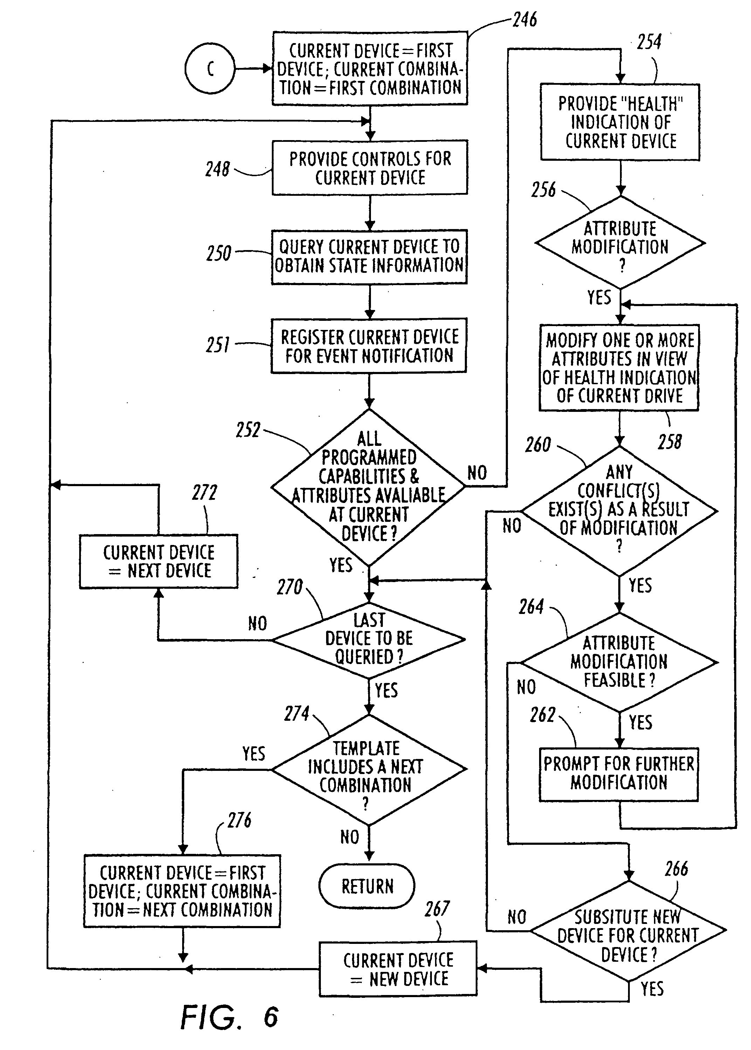

At step 220, a user is provided with the opportunity to supplement each device with one or more of these graphical indicators. A detailed description of the graphical indicators with their attendant functionality is provided in FIG. 6.

Referring again to step 174 of FIG. 3, the user decides whether the metaphorical template is to be created manually or automatically. Provided an automatic implementation is desired, the process proceeds to step 224 (Figure 5) where the user develops a partial template in which at least one initiating metaphor element and one device or storage metaphor are provided. As indicated in the discussion of FIG. 2, the application server is provided with a plurality of combinations which represent the available metaphorical templates available throughout the network system.

It will also be understood that combinations can be developed readily from the database in accordance with a supplied search term, these sorts of dynamic searches are conventional and implementations can be obtained from known dynamic searching techniques of the type provided by Mead data in their Lexis/Nexis application. Referring to step 226, a search term, developed by way of step 224, is employed to obtain all related combinations, i.e. instances on the basis of the entries in the database. In practice, the search term is developed from selected attributes in the job initiating metaphor and one or more attributes from the one or more attached device metaphors. Indeed, the selected attributes can be constrained to include only certain classes of attributes, such as stock attributes only.

Upon performing the database search, the user is informed, at step 228, of all those combinations in the network which include the attributes of the selected search term. As should be understood, the search term can be relatively broad or narrow depending on the attributes selected to develop the database search term. Depending on the instances developed, the user may wish to limit or expand the scope of this search at step 230. To change the search scope, either a heuristic term may be entered (step 232) or the search term based on step 224 may be narrowed. When a heuristic term is added to the search term, an augmented term is obtained, and when the search is narrowed, a narrowed search term is obtained. The augmented search term may accommodate for, among other things, convenience, cost, device proximity, device/attribute quality, and/or personal preference. In the preferred embodiment, additional attributes are provided for various device choices to correspond them with potential heuristics. For example, printers may be designated as "local" or "remote" so that when a proximity heuristic is included in the augmented search term, the user can be informed of all those printers which are local or remote.

In response to augmenting or narrowing the search term, an additional search, based on the new search term, is performed at step 234. Essentially, the additional search eliminates all instances not fulfilling the augmented or narrowed search. At step 236, the user is informed of the number of instances developed as a result of the additional search and if the number of instances is found to be acceptable, then each of the templates corresponding to the instances is displayed at step 240. In one example, the user scrolls through each metaphor template developed as a result of the additional search. As a result of scrolling through the various templates corresponding with the entered search term, the user, at step 242, chooses an instance to serve as the template. In accordance with the template chosen, a composite job ticket is created in a manner consistent with that described above.

Referring to FIG. 6, a technique for augmenting a metaphorical template to maximize operational flexibility is described. In general, the technique described by FIG. 6 permits graphic indicators to be added to each metaphor element and facilitates the attribute modification of individual metaphors as required. Referring specifically to step 246, a first device of a first combination is selected. In the illustrated embodiment of FIG. 6, one or more control graphic indicators, designated in FIG. 8 as "controls" is provided for each metaphor element of a metaphorical template (step 248). Each of the graphic controls indicators are generated as icons and their functional capability is based on the ability of the application server to communicate the host client with a designated device on the network. This communication is preferably facilitated by use of suitable protocols, which might include, among others, one or more protocols made available by Xerox network systems ("XNS").

Initially, at step 250, the application server queries a device to obtain suitable state information. The state information can be obtained through use of one or more of the above-discussed profiles and a suitable state holding arrangment employing concepts disclosed by the above-mentioned DPA model and/or the virtual machine arrangement of US-A-5,170,340. As will be appreciated by those skilled in the art, it is desirable to maintain a relationship in which each device automatically informs the application server of its current status. Accordingly, at step 251 a device, for which an indicator is being provided, is registered with the application server for event notification. Event notification can be provided through use of a suitable protocol, such as SNMP as discussed in further detail in US-A-5,367,635, the pertinent portions of which are incorporated herein by reference. Referring specifically to FIG. 8, it will be appreciated that both controls and status indicators are provided for each of the device metaphors.

As one or more graphic indicators are provided for a metaphor, the process checks, at step 252, whether all of the programmed capabilities or attributes are available at the current device being examined. Typically, a user will be interested in available attributes, but in some circumstances particular users such as system administrators may be interested in programmed capabilities of a machine.

Assuming that all of the programmed attributes at the current device under examination are not available, the process proceeds to step 254 where a health indication (see status indicator in FIG. 8) is provided. As mentioned above, the status indicator is updated with state information provided to the application server from the profiles or transfer function information associated with the various devices on the network. The health indication may be provided in one of several forms. In the example of FIG. 8, up and down arrows are employed to indicate "go" and "no go" conditions.

In other contemplated forms health indication could be provided by coloring the icons (e.g. "yellow" for temporary delay in operation, "red" for indefinite delay in operation and "green" for completely operable) or the connector arrows between the metaphors could be made to visually flash so that a user understands when a component of a metaphorical combination is temporarily out of order. It is contemplated-that the indicators will include property profiles which can be displayed by selecting a given indicator with a pointer. As will also be appreciated, with the advent of multimedia, health indication could be provided to a client workstation (Figures 1) in the form of a sound indicator for indicating that one or more programmed attributes are not available at a subject device. Such sound based health indicator could be achieved through use of a suitable multimedia support board provided at the client workstation.

Upon selecting the indicator, the user may decide, at step 256, to modify an attribute of the job or an attribute associated with the selected metaphor. In one example, it may be indicated that the operation of a selected device is simply delayed. Under these circumstances, a user may wish to proceed with examining the various devices of the metaphorical template without altering the job or the device under examination. On the other hand, at step 258, one or more attributes of either the job or the device associated with the subject metaphor may be altered in view of the status indicator of that device. As will be appreciated, as a result of modification, a conflict may arise between the device attributes within the metaphorical template. For example, an output stock choice at a scanner may be changed to transparency and the job ticket corresponding with the metaphorical template may call for duplexing at a printer of the template. Since most systems do not allow duplexed transparencies, an appropriate flag will be raised as a result of the check of step 260.

Assuming a conflict exists, the process prompts the user to provide further modification (step 262), provided attribute modification is feasible (step 264). There are circumstances, however, where attribute modification will not be feasible as a result of the degree of impairment of the current device (i.e. the device under examination). In this event, a new device may be substituted for the current device (step 266) and the new device will, via step 267, assume the role of the current device. As will be appreciated, the substitution of 266 could be performed manually or automatically.

Assuming that attribute modification is not required, or that no conflict exists as a result of modification, the process proceeds to step 270 where a determination as to whether the last metaphor in a metaphorical combination has been encountered is made. Assuming further metaphors have not been examined in the current metaphorical combination, the process proceeds to the next metaphor (step 272) and appropriate indicators are provided for the current combination by way of steps 248, 250 and 252. When the last device for a particular metaphorical combination has been queried/registered, it is determined via step 274 whether any further control/state information is to be provided for another metaphorical combination in the metaphorical template. For a next combination (step 276), the first unexamined metaphor is located and the process returns to step 248. Generally, the first unexamined metaphor will exist at a branch point, the information for which branch point will have been stored in accordance with the methodology described above.

Examples corresponding to the embodiment of FIGS. 3 and 4 are provided in FIGS. 7 and 8. Referring specifically to FIG. 7, a manual approach for developing a template, namely "Temp. 1.0", is described. Initially, a user obtains five metaphors, namely a job initiating metaphor 280, a scanner metaphor 282, a printer metaphor 284 and E-mail indicator 286, and a fax related metaphor 288, from the application server (FIG. 1). These metaphors are laid out on the user interface screen 142 and the various metaphors are linked to one another with connector icons 300. After laying out the metaphor elements and the icon connectors, the scanner metaphor 282 is selected with a conventional pointer 302 so that scanner choices and associated attributes are displayed. In the example of FIG. 7, two scanner choices are shown and a selected group of attributes corresponding with one of the choices is also shown. In accordance with the method of FIGS. 3 and 4, the user chooses scanner 1 and associated attributes, such as stock size (in this example "8 1/2 X 11").

After making the appropriate selection at the scanner, the user proceeds to metaphor 284 and selects the same with the pointer. It should be noted that the printer provides selections that are consistent with the scanner 1 and in the example of FIG. 7, the printer of building 2 is not available, since it is incompatible with the scanner 1. Moreover, the user chooses the north printer and the stock selection of 11 X 17 is not made available since the scanner is not capable of handling 11 X 17 stock. As shown on the screen 142, each unavailable selection is "grayed out". The above described procedure for selecting printer metaphor 284 is repeated for metaphors 286 and 288 so as to complete development for the metaphorical template Temp.1.0.

Once Temp.1.0 is developed completely, it can be stored in memory of the system 10 or deleted. For future use of a stored template version, the version can be referenced to a button or graphic control on a conventional tool bar 304 (FIG. 7). In turn, the button can be used to facilitate the automatic fetching and displaying of the stored template version.

Referring to FIG. 8, an example incorporating some of the concepts of FIGS. 5 and 6 is described. In the example of FIG. 8, the user provides metaphor elements 280, 284 and 286. Pursuant to the process of FIG. 4, the user provides the system with a heuristic indicating that s/he desires a scan-to-file process. Accordingly, the scanner 282 and storage device 306 are added to the system automatically. It will be appreciated that the example of FIG. 8 assumes that only one scan-to-file arrangement is available. But in actual practice, many instances of scan-to-file may be available and the user will be required to choose one of those instances in accordance with the procedure of FIG. 4.

Additionally, each of the metaphors is provided with appropriate indicators in accordance with the procedure of FIG. 6. As will be recognized, the template of FIG. 8 includes a problematic combination as a result of printer 284 (the status arrow of that printer indicates an operational impairment). Nonetheless, as a result of employing the controls, which permit certain combinations to be executed while other combinations are being suitably modified, the combination including metaphor elements 280, 282, 286 and 306 may be executed while suitable modifications are made to the job or the printer so that the combination including 280, 282, 284 and 306 can thereafter be executed.

Numerous features of the above-described embodiment can be appreciated by those skilled in the art. First, a technique is provided in which a user can develop a metaphorical template manually, which template is ultimately stored for usage in the form of a job ticket. In the manual approach for developing templates, the user can make choices of devices at each metaphor element and override default attributes if so desired. The orderly management of the available choices and attributes is provided transparently by an application server which updates attribute profiles dynamically. Consequently, the system of the preferred embodiment assists the user in avoiding the programming of unfeasible metaphorical combinations, and hence unfeasible job tickets.

Second, a technique is provided in which templates are automatically generated in response to a search initiated by the user. In turn, the search develops all instances corresponding to the search available on a network. The search can be limited or expanded through the entering of a heuristic term or narrowing term. Once a satisfactory search has been performed, the developed instances can be displayed and the suitable instance which is to serve as a template can be chosen. In either the manual or automatic approach, a developed template can be stored by a client in, for example, the form of a button so that the user can replicate the stored template, at a future moment, in an efficient manner.

Finally, for a given template, indicators can be provided for each metaphor element to facilitate the job ticket creation process in several respects. In one example, a status indicator is provided for each metaphor to indicate the operational status of a corresponding device. In view of the status indicator, the user can modify a job or the device in order to facilitate processing of the job. In yet another example, each metaphor element can be provided with a controls indicator so that one combination within a template can be executed while modifications are being made to another metaphorical combination. Consequently, for a given metaphorical template, certain metaphorical combinations can be executed while others are being revised or redeveloped. Preferably, each of the devices is configured in such a way that the status indicators are dynamically updated. As will be understood, this dynamic updating greatly facilitates use of the controls indicators which permit the user to start and stop selected devices depending on their current status.

## Claims

1. A system for programming a job ticket with a metaphorical template in a network document processing system (100) where a plurality of metaphor elements (280, 284 and 286) are supplied for programming a job with said job ticket, each of said plurality of metaphor elements corresponding with either a set of document processing devices (114, 102) or a set of storage devices (132) and having a graphical appearance representative of a document processing or storage device with which said graphical metaphor is related, a metaphorical template including at least two of said metaphor elements, comprising:
(a) an application server (122) for storing a first set of attributes and a second set of attributes, each of said first and second attribute sets corresponding with either capaabilities available at one of said document processing devices or capabilities available at one of said set of storage devices, said application server registering a first one of said plurality of metaphor elements with said first attribute set and a second one of said plurality of metaphor elements with said second attribute set;
(b) a user interface (142) with a screen display (112) for displaying said first one of said plurality of metaphor elements;
(c) said application server linking said first one of said plurality of metaphor elements with said second one of said plurality of metaphor elements, in response to displaying said first one of said plurality of metaphor elements, to form said metaphorical template, said metaphorical template being displayed on said user interface screen display and corresponding with a combined set of attributes, said combined set of attributes including one or more attributes from each of said first and second attribute sets; and
(d) means for programming said job ticket with selected attributes from said combined attribute set of said metaphorical template.

2. A system as claimed in claim 1, including a status indicating metaphor developed with said application server (122) and displayed on said screen display (112) of said user interface (142), said status indicating metaphor varying as a function of status information associated with said set of attributes.

3. A system as claimed in any of claims 1 and 2 for executing a job with said job ticket and wherein said job ticket being programmed by reference to said status indicating metaphor.

4. A system as claimed in any of claims 1 to 3, wherein said metaphorical template being defined by one or more metaphorical combinations, each metaphorical combination including one or more of said metaphor elements.

5. A system as claimed in any of claims 1 to 4, including an image element (300) for connecting said first one of said plurality of metaphor elements and said second one of said plurality of metaphor elements to form one of said one or more metaphorical combinations.

6. A system as claimed in any of claims 1 to 5, wherein
(a) first and second selection sets correspond with either said document processing devices (114, 102) available in the set of document processing devices or the storage devices (132) available in the set of storage devices, said application server (122) registering a first one of said plurality of metaphor elements with the said selection set and a second one of the plurality of metaphor elements with said second selection set,
(b) one of said selections in said first selection set is selected with said user interface (142),
(c) said application server (122) determines which one or more of said selections in the second selection set are compatible for use with said selection of said first selection set and modifies said second selection set to form a modified second selection set which indicates said one or more second selection set selections compatible with said first selection set selection, and
(d) said job ticket is programmed with both said first selection set selection and one of said one or more selections of said modified second selection set.

## Patentansprüche

1. System zur Programmierung eines Aufgabentickets mit einer metaphorischen Vorlage in einem Netzwerk-Dokumentenverarbeitungssystem (100), in dem eine Vielzahl von Metapherelementen (280, 284 und 286) für die Programmierung einer Aufgabe mit dem Aufgabenticket bereitgestellt werden, wobei jedes der Vielzahl von Metapherelementen entweder mit einem Satz von Dokumentverarbeitungseinheiten (114, 102) oder mit einem Satz von Speichereinheiten (132) korrespondiert und ein graphisches Aussehen aufweist, das eine Dokumentverarbeitungseinheit oder Speichereinheit repräsentiert, auf das sich das Metapherelement bezieht, und wobei eine metaphorischen Vorlage mindestens zwei der Metapherelemente beinhaltet, umfassend:
(a) einen Applikationsserver (122) zum Speichern eines ersten Satzes von Attributen und eines zweiten Satzes von Attributen, wobei jeder des ersten und zweiten Satzes von Attributen entweder mit Ressourcen vorhanden in einem der Sätze von Dokumentverarbeitungseinheiten oder mit Ressourcen vorhanden in einem der Sätze von Speichereinheiten korrespondiert, und wobei der Applikationsserver ein erstes der Vielzahl von Metapherelementen mit dem ersten Satz von Attributen und ein zweites der Vielzahl von Metapherelementen mit dem zweiten Satz von Attributen registriert;
(b) eine Benutzerschnittstelle (142) mit einem Bildschirm (112) zur Darstellung des ersten der Vielzahl von Metapherelementen,
(c) wobei der Applikationsserver das erste der Vielzahl von Metapherelementen mit dem zweiten der Vielzahl von Metapherelementen verbindet, in Antwort auf die Darstellung des ersten der Vielzahl von Metapherelementen um die metaphorische Vorlage zu bilden die metaphorische Vorlage auf dem Benutzerschnittstellenbildschirm dargestellt wird und mit einem kombinierten Satz von Attributen korrespondiert, und der kombinierte Satz von Attributen ein oder mehrere Attribute von jedem des ersten und zweiten Satzes von Attributen beinhaltet; und
(d) Mittel zur Programmierung des Aufgabentickets mit ausgewählten Attributen von dem kombinierten Satz von Attributen der Metapherelementen.

2. Das System nach Anspruch 1, umfassend eine Statusanzeigemetapher, entwickelt mit dem Applikationsserver (122) und dargestellt auf dem Bildschirm (112) der Benutzerschnittstelle (142), wobei die Statusanzeigemetapher als Funktion der Statusinformation variiert, die mit dem Satz von Attributen assoziiert ist.

3. Das System nach Anspruch 1 und 2 zum Abarbeiten einer Aufgabe mit dem Aufgabenticket und wobei das Aufgabenticket unter Bezug auf die Statusanzeigemetapher programmiert ist.

4. Das System nach einem der Ansprüche 1 bis 3, wobei die metaphorische Vorlage durch eine oder mehrere metaphorische Kombinationen definiert ist und jede metaphorische Kombination eine oder mehrere der Metapherelemente umfasst.

5. Das System nach einem der Ansprüche 1 bis 4, umfassend ein Bildelement (300) zum Verbinden der ersten Vielzahl von Metapherelementen und der zweiten Vielzahl von Metapherelementen um eine der einen oder mehreren metaphorischen Kombinationen zu bilden.

6. Das System nach einem der Ansprüche 1 bis 5, wobei
(a) erste und zweite Selektionssätze entweder mit den Dokumentverarbeitungseinheiten (114, 102), die in dem Satz von Dokumentverarbeitungseinheiten verfügbar sind, oder mit den Speichereinheiten (132) korrespondieren, die in dem Satz von Speichereinheiten verfügbar sind, wobei der Applikationsserver (122) einen ersten der Vielzahl von Metapherelementen mit dem Selektionssatz und einen zweiten der Vielzahl von Metapherelementen mit dem zweiten Selektionssatz registriert,
(b) eine der Auswahlen in dem ersten Selektionssatz mit der Benutzerschnittstelle (142) ausgewählt wird,
(c) der Applikationsserver (122) bestimmt, welche der einen oder mehreren Auswahlen in dem zweiten Selektionssatz kompatibel sind für die Benutzung mit der Auswahl des ersten Selektionssatzes, und modifiziert den zweiten Selektionssatz um einen modifizierten zweiten Selektionssatz zu bilden, der eine oder mehre Auswahlen des zweiten Selektionssatzes anzeigt, die kompatibel mit dem ersten Selektionssatz sind, und
(d) das Aufgabenticket sowohl mit der Auswahl des ersten Selektionssatzes als auch einer der einen oder mehren Auswahlen des modifizierten zweiten Selektionssatzes programmiert wird.

## Revendications

1. Système destiné à programmer une fiche de tâche au moyen d'un modèle métaphorique dans un système de traitement de document en réseau (100) dans lequel une pluralité d'éléments de métaphore (280, 284 et 286) sont fournis pour la programmation d'une tâche au moyen de ladite fiche de tâche, chacun des éléments de métaphore de ladite pluralité correspondant soit à un ensemble de dispositifs (114, 102) de traitement de documents, soit à un ensemble de dispositifs de mémorisation (132) et ayant une apparence graphique représentative d'un traitement de document ou d'un dispositif de mémorisation auxquels ladite métaphore graphique se rapporte, un modèle métaphorique comprenant au moins deux desdits éléments de métaphore, comprenant :
(a) un serveur d'application (122) destiné à mémoriser un premier ensemble d'attributs et un deuxième ensemble d'attributs, chacun desdits premier et deuxième ensemble d'attributs correspondant soit à des capacités existant à l'un desdits dispositifs de traitement de document, soit à des capacités existant à l'un dudit ensemble de dispositifs de mémorisation, ledit serveur d'application enregistrant un premier des éléments de métaphore de ladite pluralité au moyen dudit premier ensemble d'attributs et un deuxième des éléments de métaphore de ladite pluralité au moyen dudit deuxième ensemble d'attributs ;
(b) une interface d'utilisateur (142) munie d'un écran d'affichage (112), destinée à afficher ledit premier des éléments de métaphore de ladite pluralité ;
(c) ledit serveur d'application mettant en liaison ledit premier des éléments de métaphore de ladite pluralité avec ledit deuxième des éléments de métaphore de ladite pluralité, en réponse à l'affichage dudit premier des éléments de métaphore de ladite pluralité, pour former ledit modèle métaphorique, ledit modèle métaphorique étant affiché sur ledit écran d'affichage de l'interface d'utilisateur et correspondant à un ensemble combiné d'attributs, ledit ensemble combiné d'attributs comprenant un ou plusieurs attributs de chacun desdits premier et deuxième ensemble d'attributs ; et
(d) un moyen destiné à programmer ladite fiche de tâche au moyen des attributs sélectionnés à partir dudit ensemble combiné d'attributs dudit modèle métaphorique.

2. Système selon la revendication 1, comprenant une métaphore d'indication d'état développée au moyen dudit serveur d'application (122) et affichée sur ledit écran d'affichage (112) de ladite interface d'utilisateur (142), ladite métaphore d'indication d'état variant en fonction de l'information d'état associée avec ledit ensemble d'attributs.

3. Système selon l'une quelconque des revendications 1 et 2, destiné à exécuter une tâche au moyen de ladite fiche de tâche et dans lequel ladite fiche de tâche est programmée en faisant référence à ladite métaphore d'indication d'état.

4. Système selon l'une quelconque des revendications 1 à 3, dans lequel ledit modèle métaphorique est défini par une ou plusieurs combinaisons métaphoriques, chaque combinaison métaphorique comprenant un ou plusieurs desdits éléments métaphoriques.

5. Système selon l'une quelconque des revendications 1 à 4, comprenant un élément d'image (300) destiné à relier ledit premier élément métaphorique de ladite pluralité et ledit deuxième élément métaphorique de ladite pluralité pour former l'une desdites une ou plusieurs combinaisons métaphoriques.

6. Système selon l'une quelconque des revendications 1 à 5, dans lequel
(a) les premier et deuxième ensembles de sélection correspondent soit auxdits dispositifs (114, 102) de traitement de document existant dans l'ensemble de dispositifs de traitement de document, soit auxdits dispositifs de mémorisation (132) existant dans l'ensemble de dispositifs de mémorisation, ledit serveur d'application (122) enregistrant un premier des éléments de métaphore de ladite pluralité au moyen du premier ensemble de sélection et un deuxième des éléments de métaphore de ladite pluralité au moyen du deuxième ensemble de sélection,
(b) l'une desdites sélections dans ledit premier ensemble de sélection est sélectionnée au moyen de ladite interface d'utilisateur (142),
(c) ledit serveur d'application (122) détermine laquelle des une ou plusieurs desdites sélections est ou sont compatibles pour l'emploi avec la sélection dudit premier ensemble de sélection et modifie ledit deuxième ensemble de sélection pour former un deuxième ensemble de sélection modifié qui indique laquelle des ou plusieurs desdites sélections est ou sont compatibles avec ladite sélection dudit premier ensemble de sélection ; et
(d) ladite fiche de tâche est programmée à la fois au moyen de la sélection dudit premier ensemble de sélection et de l'une des une ou plusieurs desdites sélections dudit deuxième ensemble de sélections modifié.
